# EUROPÄISCHE PATENTSCHRIFT

(11) **EP 4 553 645 B1**
(45) Veröffentlichungstag und Bekanntmachung des Hinweises auf die Patenterteilung: **04.11.2026**
(21) Anmeldenummer: 24200343.2
(22) Anmeldetag: 13.09.2024
(51) Int. Cl.: G06F 8/35, B60K 35/10, G06N 3/0475, B60K 35/00, G06N 3/08, G06N 20/00, G06F 9/455, G06F 8/30, G06N 3/0455

(54) **VERFAHREN, VORRICHTUNG UND COMPUTERPROGRAMMPRODUKT ZUM ERZEUGEN EINER NUTZERSPEZIFISCHEN FUNKTIONALITÄT EINES FAHRZEUGS**
METHOD, DEVICE AND COMPUTER PROGRAM PRODUCT FOR CREATING A USER-SPECIFIC FUNCTIONALITY OF A VEHICLE
PROCÉDÉ, DISPOSITIF ET PRODUIT PROGRAMME INFORMATIQUE POUR GÉNÉRER UNE FONCTIONNALITÉ SPÉCIFIQUE À L'UTILISATEUR D'UN VÉHICULE

(30) Priorität: 09.11.2023 DE 102023131071
(43) Veröffentlichungstag der Anmeldung: 14.05.2025
(73) Patentinhaber: Bayerische Motoren Werke Aktiengesellschaft, 80809 München (DE)
(72) Erfinder: Augst, Alexander, 80937 München (DE)

(56) Entgegenhaltungen:
- EP-A1- 3 608 773
- DE-A1- 102021 128 069
- DE-B3- 102018 209 835
- TAO NING ET AL: "Program Synthesis with Generative Pre-trained Transformers and Grammar-Guided Genetic Programming Grammar", 2023 IEEE LATIN AMERICAN CONFERENCE ON COMPUTATIONAL INTELLIGENCE (LA-CCI), IEEE, 29 October 2023 (2023-10-29), pages 1 - 6, XP034529812, DOI: 10.1109/LA-CCI58595.2023.10409384

## Beschreibung

Die Erfindung betrifft ein Verfahren zum Erzeugen einer nutzerspezifischen Funktionalität eines Fahrzeugs. Die Erfindung betrifft ferner eine Vorrichtung sowie ein Computerprogrammprodukt zum Erzeugen einer nutzerspezifischen Funktionalität eines Fahrzeugs.

Aus dem Stand der Technik sind verschiedene Verfahren bekannt, bei denen Teile einer Applikation, beispielsweise eine Benutzeroberfläche mit Hilfe von Maschinenlernverfahren erzeugt werden. Es sind ferner Maschinenlernverfahren und entsprechende Entwicklerwerkzeuge bekannt, die einen Nutzer beim Erstellen einer Applikation unterstützen.

Aus der DE 10 2018 209835 B3 ist ein Verfahren zum Betreiben einer Steuervorrichtung eines Benutzergeräts bekannt. Bei dem Verfahren wird eine benutzergenerierte Steuerregel empfangen und durch eine Generatoreinrichtung auf Zulässigkeit geprüft. Aus jeder zulässigen Steuerregel wird ein benutzergenerierter Programmprozess für eine Prozessoreinrichtung erzeugt.

Die EP 3 608 773 A1 offenbart ein Verfahren zur Bereitstellung einer neuen softwarebasierten Funktionalität in einem Fahrzeug. Bei dem Verfahren wird auf Grundlage von Anforderungsdaten zunächst ein Funktionsmodell erstellt, das anschließend in Softwarecode transformiert wird. Der Softwarecode wird dann mittels virtueller Testszenarien verifiziert und schließlich per Fernverbindung im Fahrzeug installiert.

Aus der DE 10 2021 128 069 A1 ist ein ein computerimplementiertes Verfahren zur Generierung benutzerdefinierter Fahrzeugfunktionen bekannt. Bei dem Verfahren werden Informationen über Funktionsblöcke mit definierten Ein- und Ausgabeschnittstellen empfangen, eine Benutzeroberfläche mit auf Schnittstellenkategorien basierender Assistenzfunktion zur Zusammenschaltung bereitgestellt und die Zusammenschaltbarkeit der Blöcke automatisch berechnet. Ferner wird auf das folgende Dokument verwiesen: TAO NING ET AL: "Program Synthesis with Generative Pre-trained Transformers and Grammar-Guided Genetic Programming Grammar", 2023 IEEE LATIN AMERICAN CONFERENCE ON COMPUTATIONAL INTELLIGENCE (LA-CCI), IEEE, 29. Oktober 2023 (2023-10-29), Seiten 1-6, DOI: 10.1109/LA-CCl58595.2023.10409384. Aus dem Dokument sind Verfahren zur Erzeugung von Programmcode mittels generativer vortrainierter Transformer bekannt.

Aufgabe der Erfindung ist es, ein Verfahren und eine Vorrichtung anzugeben, welche das Erzeugen einer nutzerspezifischen Funktionalität eines Fahrzeugs auf eine einfache Weise ermöglichen.

Die Aufgabe wird durch jeden der unabhängigen Ansprüche gelöst. Vorteilhafte Ausführungsformen werden unter anderem in den abhängigen Ansprüchen beschrieben. Es wird darauf hingewiesen, dass zusätzliche Merkmale eines von einem unabhängigen Patentanspruch abhängigen Patentanspruchs ohne die Merkmale des unabhängigen Patentanspruchs oder nur in Kombination mit einer Teilmenge der Merkmale des unabhängigen Patentanspruchs eine eigene und von der Kombination sämtlicher Merkmale des unabhängigen Patentanspruchs unabhängige Erfindung bilden können, die zum Gegenstand eines unabhängigen Anspruchs, einer Teilungsanmeldung oder einer Nachanmeldung gemacht werden kann. Dies gilt in gleicher Weise für in der Beschreibung beschriebene technische Lehren, die eine von den Merkmalen der unabhängigen Patentansprüche unabhängige Erfindung bilden können.

Bei dem vorgeschlagenen Verfahren zum Erzeugen einer nutzerspezifischen Funktionalität eines Fahrzeugs, wird eine Benutzereingabe erfasst, welche die nutzerspezifische Funktionalität, zum Beispiel durch gewünschte Merkmale, charakterisiert. Es werden abhängig von der Benutzereingabe Eingabedaten erzeugt. Abhängig von den Eingabedaten wird zumindest ein Teil eines Programcodes eines Computerprogramms generiert, das die nutzerspezifische Funktionalität bereitstellt, wenn das Computerprogramm auf einer Steuereinheit des Fahrzeugs ausgeführt wird. Das Computerprogramm wird zur Ausführung auf einer Steuereinheit des Fahrzeugs bereitgestellt, um die benutzerspezifische Funktionalität bereitzustellen. Vorzugsweise umfasst das vorgeschlagene Verfahren einen Schritt, bei dem das Computerprogramm auf der Steuereinheit des Fahrzeugs ausgeführt wird, um die benutzerspezifische Funktionalität bereitzustellen

Insbesondere handelt es sich bei der in dem vorliegenden Dokument beschriebenen nutzerspezifischen Funktionalität des Fahrzeugs um eine für einen oder mehrere bestimmte Nutzer (auch Benutzer oder genauso Nutzerinnen bzw. Nutzer:innen) spezifische, insbesondere individuelle Funktionalität des Fahrzeugs, insbesondere auch aufzufassen als Funktionalität für ein Fahrzeug, insbesondere für das bestimmte Fahrzeug bzw. die bestimmte Fahrzeugfunktionalität. Der Nutzer ist insbesondere ein Endkunde bzw. Endverbraucher und/oder ein Halter bzw. Nutzer des Fahrzeugs. Dabei schafft die Erfindung auch für Laien die Möglichkeit, die an persönliche Wünsche angepasste oder auf persönliche Wünsche angepasste bzw. zugeschnittene nutzerspezifische Funktionalität zu erzeugen.

Die nutzerspezifische Funktionalität kann eine neue Funktionalität oder eine Funktionserweiterung zu einer, zum Beispiel bereits im Fahrzeug vorhandenen und/oder durch einen Hersteller bereitgestellte, Fahrzeugfunktionalität und/oder eine Funktionserweiterung zu einer bereits erzeugten nutzerspezifischen Funktionalität umfassen oder sein.

Bei dem Programmcode bzw. dem Computerprogramm handelt es sich insbesondere um:
- ein auf eingebettete und/oder automotive Systeme (embedded bzw. automotive), insbesondere auf Merkmale eines Fahrzeugtyps, seiner Steuereinheiten bzw. weiterer Merkmale des Fahrzeugtyps, spezialisiertes Computerprogramm;
- ein zumindest 10, 20, 30, 50, 100, 200 Zeilen Code umfassendes, nichttriviales Computerprogramm bzw. ein Computerprogramm mit einer vergleichbaren Komplexität, zum Beispiel bezogen auf den entsprechenden Quellcode und/oder einer Executable;
   und/oder
- einen Pointer, zum Beispiel für Fahrzeugbussysteme typische Pointer, ein Zugriffsmethoden und/oder Schnittstellen umfassendes Computerprogramm.

Die Benutzereingabe kann insbesondere in natürlicher Sprache, beispielsweise in Textform oder als eine Spracheingabe erfolgen. Die Erzeugung des Programcodes kann insbesondere auf der Steuereinheit oder einer oder mehreren weiteren Steuereinheiten des Fahrzeugs selbst erfolgen. Beispielsweise kann der Programmcode auf einer hierfür ausgebildeten Steuereinheit des Fahrzeugs erzeugt werde, wobei der Programmcode bzw. die nutzerspezifische Funktionalität auf einer oder mehreren anderen Steuereinheiten des Fahrzeugs ausführbar sind. Alternativ kann zumindest ein Teil des Programcodes durch eine von dem Fahrzeug entfernte Steuereinheit (Backend) erzeugt werden. Die nutzerspezifische Funktionalität ist insbesondere eine Funktionalität des Fahrzeugs, die durch eine oder mehre Funktionseinheiten des Fahrzeugs ausgeführt werden kann. In anderen Worten, die nutzerspezifische Funktionalität kann als eine Applikation angesehen werden, die auf einer oder mehreren Steuereinheiten des Fahrzeugs ausführbar ist, um eine oder mehrere Funktionseinheiten des Fahrzeugs zu betreiben.

Der Begriff "Betreiben" einer Fahrzeugfunktionalität kann als ein Ansteuern, ein Einstellen, zum Beispiel Verändern eines Betriebsmodus und/oder von Einstellungen, ein Pausieren, ein Deaktivieren oder Aussetzen, insbesondere ein kurzzeitiges Aussetzen, oder ein Anpassen einer sonstig fälligen Aktion, eine Auslösung bzw. eine Reaktion der Fahrzeugfunktion umfassen oder sein. Unter dem Begriff "Fahrzeugfunktionalität" können ein oder mehrere Leistungsmerkmale, insbesondere Merkmale, einer oder mehrerer Fahrzeugfunktionalitäten oder einer Kombination solcher aufgefasst werden.

Alternativ oder zusätzlich zu einer ganz oder überwiegend eigenständigen Applikation kann die nutzerspezifische Funktionalität auch als eine Erweiterung einer bereits existierenden Applikation, zum Beispiel einer bereits existierenden oder bereits erzeugten Fahrzeugfunktionalität, insbesondere als ein Plugin erzeugt werden, insbesondere ein nutzerspezifisches Plugin. Insbesondere kann die nutzerspezifische Funktionalität zumindest eine teilweise autarke, zumindest teilweise in eine entsprechende Steuereinheit und/oder in eine oder mehrere sonstiger Fahrzeugfunktionalitäten bzw. ins Fahrzeug integrierte bzw. eingebettete, insbesondere "embedded", Funktionalität bzw. Applikation umfassen oder sein.

Die im vorliegenden Dokument beschriebene Steuereinheit des Fahrzeugs kann beispielsweise eine ins Fahrzeug verbaute bzw. in dem Fahrzeug angeordnete Recheneinheit, zum Beispiel eine Recheneinheit, insbesondere ein Integrationssteuergerät, oder eine von dem Fahrzeug entfernt angeordnete Recheneinheit, zum Beispiel Backend oder Cloud, umfassen oder sein. Die Steuereinheit des Fahrzeugs kann auch, zum Beispiel mittels einer informationstechnischen Wirkverbindung, durch sowohl lokale als auch entfernte Recheneinheiten gebildet werden.

Mit der Benutzereingabe charakterisiert oder auch definiert der Nutzer die von ihm gewünschte nutzerspezifische Funktionalität. Die Benutzereingabe kann zum Beispiel ein oder mehrere gewünschte Merkmale einer im Wesentlichen neuen Funktionalität oder Merkmale die eine gewünschte Änderung einer Funktionalität einer, zum Beispiel im Fahrzeug bereits vorhandenen Fahrzeugfunktionalität umfassen.

Beispielsweise kann die Vorrichtung, insbesondere im Rahmen der in dem vorliegenden Dokuments beschriebenen generativer vortrainierter Transformer, eingerichtet sein, eine vergleichsweise abstrakte und/oder durch einen bestimmten Zusammenhang und/oder Logik beschriebene und/oder einen oder mehrere Sammelbegriffe umfassende Benutzereingabe auszuwerten.

Alternativ oder zusätzlich kann die Benutzereingabe eine oder mehrere gewünschte Wirkverbindungen und/oder nicht gewünschte, insbesondere auszuschließende, Wirkverbindungen zwischen Fahrzeugfunktionalitäten und weiteren Gegebenheiten, Datenbanken, Daten bestimmter Arten und/oder Funktionalitäten des Fahrzeugs umfassen. Beispielsweise stellt der Nutzer mit seiner Eingabe eine von ihm gewünschte Wirkverbindung zwischen bereits existierenden Fahrzeugfunktionalitäten und/oder zwischen zumindest zwei weiteren Fahrzeugfunktionalitäten her. Eine der zumindest zwei Funktionalitäten kann eine allgemeine, zum Beispiel von einem Hersteller des Fahrzeugs bzw. von einer Drittpartei gelieferte, Fahrzeugfunktionalität umfassen oder sein. Eine der zumindest zwei Funktionalitäten kann eine, zum Beispiel bereits erzeugte, nutzerspezifische Funktionalitäten umfassen oder sein. Auch kann die Vorrichtung eine Wirkverbindung zwischen zumindest zwei nutzerspezifischen Funktionalitäten berücksichtigen. Insbesondere kann dabei eine weitere nutzerspezifische Funktionalität erzeugt werden.

Alternativ oder zusätzlich kann die Benutzereingabe eine oder mehrere gewünschte und/oder nicht gewünschte, insbesondere auszuschließende, Auslöser (zum Beispiel Ereignis und/oder das Über- oder Unterschreiten bestimmter Maße eines bestimmten Parameters) definieren, deren Auftreten (zum Beispiel im Falle ihrer Erkennung) die nutzerspezifische Fahrzeugfunktionalität betreiben, insbesondere auslösen soll. Beispielsweise kann der Nutzer mit seiner Benutzereingabe ferner Auslöser definieren, deren Auftreten die nutzerspezifische Funktionalität auslöst, beispielsweise ein bestimmtes Ereignis und/oder das Über- oder Unterschreiten einer bestimmten Größe. Ferner kann eine Logik zwischen zumindest zwei Auslösern charakterisiert werden. Beispielsweise wenn ein erster Auslöser zweimal oder dreimal zum Beispiel innerhalb einer Fahrt oder einer durch bestimmte Merkmale gekennzeichneten Fahrt vorkommt und/oder kein zweiter Auslöser vorkommt, dann soll eine zum Beispiel in der Benutzereingabe charakterisierte, Auslösung oder Nichtauslösung einer Fahrzeugfunktionalitäten erfolgen.

Die Benutzereingabe kann bevorzugt in Textform und/oder gesprochener Form erfolgen, insbesondere in natürlicher Sprache. Daher sind von Seiten des Nutzers insbesondere keine Programmierkenntnisse erforderlich. Ferner muss der Nutzer auch keine Kenntnisse über die genauen Wirkungsweisen der bereits existierenden Fahrzeugfunktionalitäten aufweisen, um die nutzerspezifische Funktionalität definieren zu können. Damit ermöglicht das vorgeschlagene Verfahren dem Nutzer, die nutzerspezifische Funktionalität des Fahrzeugs auf eine einfache Weise zu erzeugen.

Bei einer Ausführungsform entsprechend der Erfindung wird der Programmcode unter Verwendung eines generativen vortrainierten Transformers erzeugt. Generative vortrainierte Transformer werden auch Generative Pre-trained Transformer oder GPT genannt. Generative vortrainierte Transformer, insbesondere Large Language Models, können natürliche Sprache interpretieren und in natürlicher Sprache erzeugte Anweisungen umsetzen. Die Benutzereingabe kann somit in einer für den Nutzer besonders intuitiven Art und Weise erfolgen, wodurch die Erzeugung der benutzerspezifischen Funktionalität noch einmal vereinfacht wird. Alternativ zu einem generativen vortrainierten Transformer kann auch ein neuronales Netz mit einer entsprechenden Architektur für die Erzeugung des Programmcodes verwendet werden.

Insbesondere handelt es sich bei dem generativen vortrainierten Transformer um ein generatives, insbesondere statistisches Modell, insbesondere ein zur Verwendung in einem Fahrzeug und/oder zum Erzeugen der nutzerspezifischen Funktionalität ausgebildetes, insbesondere darauf - mehr oder minder eng - spezialisiertes Modell. Insbesondere kann der generative vortrainierte Transformer ein Large Language Model umfassen und/oder die natürliche Sprache interpretieren und in natürlicher Sprache erzeugte Anweisungen umsetzen.

Der generativen vortrainierten Transformer bzw. das Modell kann ferner auf einen bestimmten Fahrzeugtyp, das Fahrzeug, einen bestimmen Nutzer und/oder Betreiber des Fahrzeugs nachtrainiertes Modell sein oder ein auf Basis eines solchen nachtrainierten Modells aufgebaut sein und/oder von einem solchen gesteuert werden. Insbesondere kann das Modell ein Sprachmodell oder ein Modell mit Sprachunterstützung, insbesondere ein sogenanntes Large-Language-Modell umfassen oder sein.

Bei dieser Ausführungsform wird unter Berücksichtigung zumindest einer Fahrsituation, eines Zustandes eines Fahrzeuginsassen und/oder eines Zustandes des Fahrzeugs und unter Verwendung des generativen vortrainierten Transformers eine Ausgabe erzeugt, um dem Nutzer beim Erzeugen der Benutzereingabe zu assistieren. Die Ausgabe kann beispielsweise in Textform und/oder als eine durch den generativen vortrainierten Transformer erzeugte Sprachausgabe erfolgen.

Vorzugsweise wird die Ausgabe durch eine Ausgabeeinheit des Fahrzeugs ausgegeben, beispielsweise in einer graphischen und/oder auditiven Form, zum Beispiel mittels einer zum Fahrzeug gehörenden oder im Fahrzeug mitgeführten Anzeigeeinheit und/oder einem Lautsprecher. Alternativ oder zusätzlich kann die Ausgabe durch ein mobiles Endgerät des Nutzers ausgegeben werden, beispielsweise ein Smartphone oder einen Tabletcomputer. Bei dieser Ausführungsform erzeugt der generative vortrainierte Transformer auf Grundlage der Fahrsituation, des Zustandes eines Fahrzeuginsassen und/oder des Fahrzeugs beispielsweise eine Liste mit möglichen Auslösern und existierenden Fahrzeugfunktionalitäten, anhand derer der Nutzer die nutzerspezifische Funktionalität definieren kann.

Bei einem weiteren Ausführungsbeispiel kann der generative vortrainierte Transformer dazu ausgebildet sein, d.h. zum Beispiel trainiert und/oder nachtrainiert werden oder sein, einen oder mehrere Vorschläge für die Benutzereingabe und/oder für eine weitere, zum Beispiel die erste Benutzereingabe präzisierende oder zu der ersten Benutzereingabe alternative, Benutzereingabe definieren. Beispielsweise kann dem Nutzer bereits in der Anfangsphase oder während des Vorgangs eine zweckmäßige und/oder auf den Benutzer, Fahrsituation, Zustand des Benutzers, etc., angepasste Vorschläge, insbesondere zur Auswahl von Benutzereingaben bereitgestellt, insbesondere generiert werden. Aus diesen kann der Nutzer insbesondere mittels einer vereinfachten Bedienaktion wählen und/oder die der Nutzer weiter modifizieren kann.

Der generative vortrainierte Transformer kann dem Nutzer mittels der Ausgabe ferner Vorschläge machen, wie die Benutzereingabe sinnvoll ergänzt werden kann. Auf Grundlage solcher Vorschläge kann der Nutzer wesentlich einfacher entscheiden, wie er seine nutzerspezifische Funktionalität definieren möchte. Durch das Erzeugen der Ausgabe, um dem Nutzer beim Erzeugen der Benutzereingabe zu assistieren, wird somit die Nutzerfreundlichkeit des Verfahrens gesteigert.

Bei einem weiteren Ausführungsbeispiel ist der generative vortrainierte Transformer dazu ausgebildet einen oder mehrere Vorschläge für die Benutzereingabe und/oder für eine weitere, zum Beispiel die erste Benutzereingabe präzisierende oder zu der ersten Benutzereingabe alternative Benutzereingabe definieren. Beispielsweise können dem Nutzer bereits in der Anfangsphase oder während des Vorgangs zweckmäßige und/oder auf den Benutzer, die Fahrsituation, den Zustand des Benutzers angepasste Vorschläge, insbesondere zur Auswahl von Benutzereingaben bereitgestellt werden, insbesondere generiert werden. Aus diesen kann der Nutzer insbesondere mittels einer vereinfachten Bedienaktion wählen und/oder kann der Nutzer diese weiter modifizieren.

Bei einer weiteren Ausführungsform wird abhängig von den Eingabedaten und unter Verwendung des generativen vortrainierten Transformers ermittelt, ob und welche Daten, Datenbanken, Bibliotheken, Schnittstellen, und/oder Treiber für die Bereitstellung der nutzerspezifischen Funktionalität erforderlich sind. Der Programmcode wird unter Berücksichtigung des Ergebnisses der Ermittlung erzeugt. Die Ermittlung kann insbesondere unter Verwendung des generativen vortrainierten Transformers erfolgen. Bestimmte Abhängigkeiten können auch im Voraus charakterisiert, insbesondere definiert worden sein. Beispielsweise kann für das Ansteuern einer bereits existierenden Fahrzeugfunktionalität oder einer Funktionseinheit des Fahrzeugs ein bestimmter Treiber erforderlich sein. Die entsprechende Information bzw. der Treiber selbst kann mittels des generativen vortrainierten Transformer ermittelt bzw. generiert werden. Die Information kann beim Erzeugen des Programmcodes berücksichtigt bzw. eingebettet bzw. inkludiert werden. Durch Verwenden der vorgenannten bereits existierender Elemente wird die Erzeugung des Programmcodes und damit der nutzerspezifischen Funktionalität wesentlich vereinfacht. Der Nutzer kann in die Verwendung der bereits existierenden Elemente eingebunden werden. Beispielsweise kann eine bestimmte Bibliothek erst dann verwendet werden, wenn der Nutzer sein ausdrückliches Einverständnis hierzu erteilt hat oder nicht widersprochen hat. Insbesondere kann der Nutzer vorher über die Konsequenzen informiert werden, die das Einbinden der bereits existierenden Elemente und/oder Generierung neuer Elemente hat.

Bei einer weiteren Ausführungsform wird der Programmcode derart erzeugt, dass der Zugriff des Computerprogramms auf Ressourcen der Steuereinheit begrenzt ist, wenn das Computerprogramm auf der Steuereinheit ausgeführt wird, insbesondere derart, dass das Computerprogramm nur auf vordefinierte Ressourcen der Steuereinheit Zugriff hat. Beispielsweise kann der Programmcode derart erzeugt werden, dass das Computerprogramm nur auf abgegrenzte CPU-Ressourcen, RAM und/oder Bordnetzkommunikation Zugriff hat. Diese Begrenzung kann dynamisch erfolgen oder im Voraus definiert werden. Durch die Begrenzung der Ressourcen der Steuereinheit, auf welche das Computerprogramm Zugriff hat, wird die Ausführung des Computerprogramms sicherer. Somit kann die Sicherheit und/oder Verfügbarkeit derart erhöht werden, dass diese den insbesondere für die Anwendung im Automobilbereich typischen Standards und Anforderungen gerecht wird.

Bei einer weiteren Ausführungsform wird der Programmcode derart erzeugt, dass der Zugriff des Computerprogramms auf vordefinierte Fahrzeugfunktionalitäten begrenzt ist, wenn das Computerprogramm auf der Steuereinheit ausgeführt wird. Bei dieser Ausführungsform kann die nutzerspezifische Funktionalität nur solche bereits existierenden Fahrzeugfunktionalitäten betreffen, die ausdrücklich freigegeben wurden. Durch diese Begrenzung wird die Ausführung der nutzerspezifischen Funktionalität erheblich sicherer, so dass diese den insbesondere für die Anwendung im Automobilbereich typischen Standards und Anforderungen gerecht wird.

Bei einer weiteren Ausführungsform umfasst die Steuereinheit eine zumindest teilweise isolierte Laufzeitumgebung, insbesondere einen Hypervisor, eine virtuelle Maschine oder eine Trusted Computing Base. Der Programmcode wird innerhalb der zumindest teilweise isolierten Laufzeitumgebung ausgeführt, um die nutzerspezifische Funktionalität bereitzustellen. Die zumindest teilweise isolierte Laufzeitumgebungen limitieren den Zugriff von Computerprogrammen auf Systemressourcen, beispielsweise durch Virtualisierung. Bei dieser Ausführungsform wird die eine zumindest teilweise isolierte Laufzeitumgebung verwendet, um den Zugriff des Computerprogramms auf vordefinierte Ressourcen der Steuereinheit und/oder vordefinierte Fahrzeugfunktionalitäten zu begrenzen. Dies hat die oben beschriebenen Vorteile hinsichtlich Sicherheit und Verfügbarkeit, insbesondere bei der Verwendung im Automobilbereich.

Bei einer weiteren Ausführungsform wird der Programmcode derart erzeugt, dass Ergebnisse der Ausführung der nutzerspezifischen Funktionalität, die bestimmten ersten Merkmalen, insbesondere ersten Wertebereichen und/oder ersten Mustern, entsprechen, unterbunden werden und/oder dass ausschließlich Ergebnisse der Ausführung der nutzerspezifischen Funktionalität, die bestimmten zweiten Merkmalen, insbesondere zweiten Wertebereichen und/oder zweiten Mustern, entsprechen, ermöglicht werden, wenn das Computerprogramm auf der Steuereinheit ausgeführt wird. Bei dieser Ausführungsform wird der Programmcode derart erzeugt, dass zum Beispiel bestimmte Ausgaben oder Aktionen eingeschränkt oder ganz unterbunden werden oder dass nur vorbestimmte Ausgaben oder Aktionen zugelassen werden. Beispielsweise können bestimmte Bildausgaben und/oder Tonausgaben unterbunden werden, um beispielsweise sittenwidrige Ausgaben zu unterbinden. Beispielsweise kann das Erzeugen von, zum Beispiel durch den Nutzer charakterisierten, Datenverknüpfungen und die Datenaggregation unterbunden oder nur in einem, zum Beispiel durch den Nutzer charakterisierten, begrenzten Umfang gestattet werden. Dies kann erfolgen, um geltende und/oder vom Nutzer gewünschte Datenschutzvorgaben besser oder benutzerspezifisch einhalten zu können. Ferner können bestimmte Aktionen von Aktoren des Fahrzeugs untersagt oder auf einen vordefinierten Rahmen begrenzt werden, um die Fahrsicherheit des Fahrzeugs gewährleisten zu können, wenn die nutzerspezifische Funktionalität ausgeführt wird. Die Beschränkungen der Ausgaben und/oder Aktionen können insbesondere personenspezifisch, fahrzeugspezifisch, kontextspezifisch und/oder situationsspezifisch vorbestimmt werden.

Die Erfindung betrifft ferner eine Vorrichtung zum Erzeugen einer nutzerspezifischen Funktionalität eines Fahrzeugs. Die Vorrichtung umfasst eine Eingabeeinheit, die dazu ausgebildet ist, eine Benutzereingabe zu erfassen, welche die nutzerspezifische Funktionalität charakterisiert, und abhängig von der Benutzereingabe Eingabedaten zu erzeugen. Die Vorrichtung umfasst ferner eine Programmgenerierungseinheit, die dazu ausgebildet ist, abhängig von den Eingabedaten zumindest einen Teil eines Programcodes eines Computerprogramms zu generieren, das die nutzerspezifische Funktionalität bereitstellt, wenn das Computerprogramm auf einer Steuereinheit des Fahrzeugs ausgeführt wird.

Die Vorrichtung hat dieselben Vorteile wie das beanspruchte Verfahren. Insbesondere kann die Vorrichtung mit den Merkmalen der auf das Verfahren gerichteten abhängigen Ansprüche weitergebildet werden. Ferner kann das oben beschriebene Verfahren mit Merkmalen weitergebildet werden, die in diesem Dokument im Zusammenhang mit der Vorrichtung beschrieben sind.

Bei einer Ausführungsform ist die Eingabeeinheit dazu ausgebildet, die Benutzereingabe in Textform, in Form einer Spracheingabe und/oder in Form einer Benutzerinteraktion mit einer graphischen Benutzeroberfläche zu empfangen. Beispielsweise kann die Eingabeeinheit dazu ausgebildet sein, die graphische Benutzeroberfläche derart zu erzeugen, dass diese eine Reihe von Elementen aufweist, aus denen der Nutzer die Benutzereingabe zusammensetzen kann. Einzelne Elemente der graphische Benutzeroberfläche können dabei Teilen der Benutzereingabe entsprechen, beispielsweise Auslöser und bereits existierende Fahrzeugfunktionalitäten. Dadurch kann die Benutzerfreundlichkeit der Vorrichtung weiter signifikant verbessert werden.

Die Erfindung betrifft ferner ein Computerprogrammprodukt zum Erzeugen einer nutzerspezifischen Funktionalität. Das Computerprogrammprodukt umfasst ein Computerprogramm zum Erzeugen der nutzerspezifischen Funktionalität, das dazu ausgebildet ist, das vorbeschriebene Verfahren auszuführen, wenn das Computerprogramm zum Erzeugen der nutzerspezifischen Funktionalität auf einer oder mehreren Steuereinheiten ausgeführt wird.

Das Computerprogrammprodukt hat dieselben Vorteile wie das beanspruchte Verfahren und die beanspruchte Vorrichtung. Insbesondere kann das Computerprogrammprodukt mit den Merkmalen der auf das Verfahren oder die Vorrichtungen gerichteten abhängigen Ansprüche weitergebildet werden. Ferner können das oben beschriebene Verfahren und die oben beschriebene Vorrichtung mit Merkmalen weitergebildet werden, die in diesem Dokument im Zusammenhang mit dem Computerprogrammprodukt beschrieben sind.

Gemäß einer Ausführungsform umfasst das Computerprogramm zumindest einen Teil eines zum Beispiel zur Ausführung des Verfahrens eingerichteten, vortrainierten generativen vortrainierten Transformers, insbesondere einen Teil des jeweiligen vortrainierten Modells, und/oder Logik und/oder Daten zum Trainieren, insbesondere Nachtrainieren, und/oder zum Betreiben des generativen vortrainierten Transformers. Der zumindest eine Teil, zum Beispiel Teil des Modells, bestimmte Schichten des neuronalen Netzes, etc., des vortrainierten generativen vortrainierten Transformers kann zur Ausführung eines oder mehrerer Schritte des Verfahrens ausgebildet sein oder als ein Update eines bisherigen Computerprogramms ausgebildet sein, welches beispielsweise im Rahmen einer Funktionserweiterung, beispielsweise im Rahmen eines sogenannten "Remote Software Update", insbesondere mittels eine Datenverbindung, auf die jeweiligen Einheiten des Fahrzeugs aufgespielt bzw. aktualisiert werden.

Ausführungsbeispiele der Erfindung werden im Folgenden anhand der Figuren näher erläutert. Darin zeigen:
- Figur 1: in schematischer Darstellung eine Vorrichtung zum Erzeugen einer nutzerspezifischen Funktionalität eines Fahrzeugs; und
- Figur 2: einen Ablaufplan eines Verfahrens zum Erzeugen der nutzerspezifischen Funktionalität des Fahrzeugs.

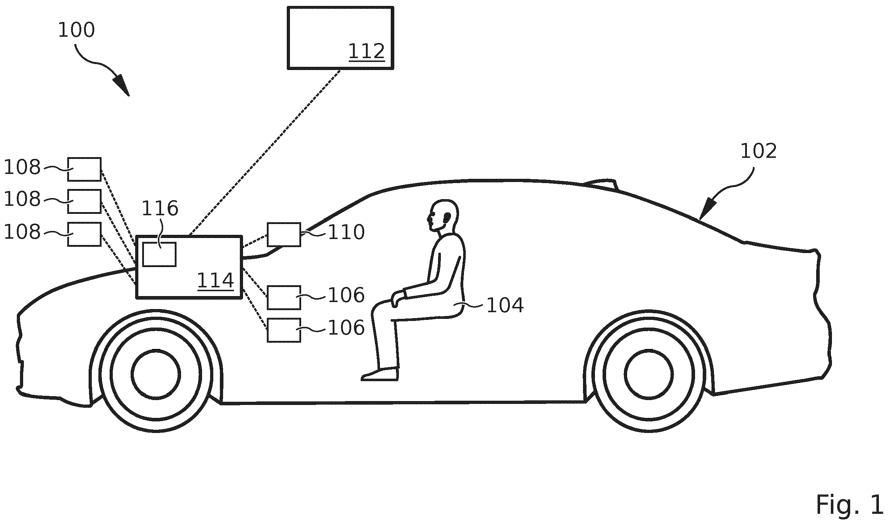

Figur 1 zeigt in schematischer Darstellung eine Vorrichtung 100 zum Erzeugen einer nutzerspezifischen Funktionalität eines Fahrzeugs 102.

Die Vorrichtung 100 dient dazu, es einem Nutzer 104 zu ermöglichen, auf eine einfache Weise die nutzerspezifische Funktionalität für das Fahrzeug 102 zu erzeugen. Die nutzerspezifische Funktionalität besteht insbesondere darin, eine oder mehrere bereits existierende, d.h. zum Beispiel schon vorhandene oder zum Lieferumfang des Fahrzeugs 102 gehörende, Fahrzeugfunktionalitäten 106 in einer durch den Nutzer vordefinierten Weise auszuführen. Die Fahrzeugfunktionalitäten 106 sind in Figur 1 rein beispielhaft als Funktionseinheiten des Fahrzeugs 102 dargestellt. Insbesondere kann der Nutzer 104 charakterisieren, insbesondere definieren bzw. spezifizieren, dass die nutzerspezifische Funktionalität in Abhängigkeit von bestimmten oder bestimmte Gegebenheiten repräsentierenden Sensordaten, die durch Sensoren 108 des Fahrzeugs 102 bereitgestellt werden, oder von aus Sensordaten abgeleiteten Größen, beispielsweise der momentanen Fahrsituation oder eines Zustands des Nutzers 104, ausgeführt wird. Bei einem Beispiel definiert der Nutzer 104 als die nutzerspezifische Funktionalität, bei der bei schlechten Wetter, zum Beispiel wenn ein schlechtes Wetter vorhergesagt und/oder erkannt wird und/oder wenn eine Information über ein schlechtes Wetter ermittelt wird, eine Warnung vor Fußgängern früher als sonst und/oder auf eine andere Art und Weise ausgegeben werden soll. In diesem Beispiel umfassen die Sensordaten Wetterdaten und werden beispielsweise durch eine Außenkamera ermittelt und/oder von einem entsprechenden Dienst empfangen. Als bereits existierende Fahrzeugfunktionalität wird in diesem Beispiel die Warnung vor Fußgängern angesteuert.

Die Vorrichtung 100 umfasst eine Eingabeeinheit 110 zum Empfangen einer Benutzereingabe des Nutzers 104 und zum Umwandeln der Benutzereingabe in Eingabedaten. Die Benutzereingabe definiert die nutzerspezifische Funktionalität und kann insbesondere in natürlicher Sprache erfolgen, insbesondere in Kombination mit einer oder mehreren weiteren Eingaben. In einer besonders einfachen Ausführungsform ist die Eingabeeinheit 110 dazu ausgebildet, die Benutzereingabe in Textform zu empfangen. Beispielsweise umfasst die Eingabeeinheit 110 eine Tastatur oder einen Touchscreen mit entsprechender Eingabefunktion. Die Eingabeeinheit 110 kann aber auch ein Mikrophon zum Empfangen der Benutzereingabe in sprachlicher bzw. gesprochener Form umfassen. Bei einer solchen Ausführungsform ist die Eingabeeinheit 110 insbesondere dazu ausgebildet, ein Spracherkennungsverfahren durchzuführen, um die gesprochene Benutzereingabe in Eingabedaten in einer Textform umzuwandeln, die so leichter weiterverarbeitbar sind.

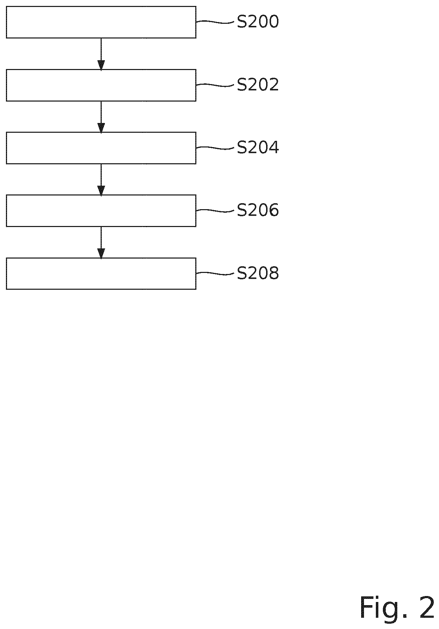

Alternativ oder zusätzlich kann Eingabeeinheit 110 ferner dazu ausgebildet sein, dem Nutzer 104 eine graphische Benutzeroberfläche auszugeben und die Benutzereingabe als eine Benutzerinteraktion mit der graphischen Benutzeroberfläche zu empfangen. Beispielsweise ist die Eingabeeinheit 110 ein Touchscreen des Fahrzeugs 102 und die Benutzerinteraktion besteht darin, Elemente der graphischen Benutzeroberfläche, die jeweils beispielsweise Sensoreingaben und bereits existierenden Fahrzeugfunktionalitäten 106 entsprechen, in einer verknüpfenden Weise zusammenzusetzen, um die Benutzereingabe zu bilden. Die Benutzereingabe ist im Folgenden unter Bezugnahme auf Figur 2 noch näher beschrieben.

Die Vorrichtung 100 umfasst ferner eine Programmgenerierungseinheit 112, die dazu ausgebildet ist, aus der Benutzereingabe zumindest einen Teil eines Programcodes eines Computerprogramms zu generieren, das die nutzerspezifische Funktionalität bereitstellt, wenn das Computerprogramm auf einer Steuereinheit 114 des Fahrzeugs 102 ausgeführt wird. Die Programmgenerierungseinheit 112 kann ein Teil des Fahrzeugs 102 selbst sein. In Figur 1 ist die Programmgenerierungseinheit 112 rein beispielhaft als eine von dem Fahrzeug 102 entfernte Recheneinheit gezeigt, beispielsweise ein Backendserver oder ein Cloudserver. Ferner kann die Programmgenerierungseinheit 112 auch auf eine Recheneinheit des Fahrzeugs 102 und die von dem Fahrzeug 102 entfernten Recheneinheit verteilt werden. Beispielsweise werden bestimmte Funktionen der Programmgenerierungseinheit 112 lokal in dem Fahrzeug 102 ausgeführt, während andere, insbesondere rechenintensive Funktionen der Programmgenerierungseinheit 112 auf der entfernten Recheneinheit ausgeführt werden.

Die Programmgenerierungseinheit 112 ist insbesondere dazu ausgebildet einen generativen vortrainierten Transformer zu betreiben, um den Programcode zu erzeugen. Dabei werden die Eingabedaten dem generativen vortrainierten Transformer als Eingabe eingegeben und die Ausgabe des generativen vortrainierten Transformers entspricht zumindest einem Teil des Programcodes.

Bevorzugt handelt es sich bei den im vorliegenden Dokument beschriebenen generativen vortrainierten Transformer um eine vergleichsweise schwache und/oder vergleichsweise eng spezialisierte künstliche Intelligenz. Dadurch ist das Verfahren wesentlich einfacher und/oder mit begrenzten Ressourcen, zum Beispiel unter Verwendung der Mittel des Fahrzeugs 102, realisierbar und/oder in der praktischen Handhabung besser beherrschbar. Beispielsweise können dadurch etwaige Gefahren bei der Nutzung, zum Beispiel einer relativ universellen bzw. starken künstlichen Intelligenz, reduziert und/oder das Ergebnis des Verfahrens besser vorhersagbar gemacht werden.

Der generative vortrainierte Transformer kann alternativ oder zusätzlich betrieben werden, um dem Nutzer 104 bei der Formulierung der Benutzereingabe zu assistieren. Beispielsweise kann der generative vortrainierte Transformer betrieben werden, um eine Liste mit Vorschlägen für die Benutzereingabe oder Vorschläge für die Vervollständigung der Benutzereingabe zu erzeugen. Diese Vorschläge können generiert werden abhängig von: Fahrsituationsdaten, die eine das Fahrzeug betreffende Fahrsituation kennzeichnen; Insassenzustandsdaten, die den Zustand eines Fahrzeuginsassen kennzeichnen; und/oder Fahrzeugzustandsdaten, die den Zustand des Fahrzeugs, insbesondere eines oder mehrerer Vorrichtungen oder Fahrzeugfunktionen kennzeichnender Daten zu erzeugen. Die vorgenannten Daten können zum Beispiel auf den in dem Fahrzeug 102 verfügbaren Sensordaten und Fahrzeugfunktionalitäten 106 basieren, aber auch auf einem, zum Beispiel mit einem Anwendergerät, etwa: Smartphone, Smartwatch, Smart-Close erfassten, Zustand des Nutzers 104 oder des Fahrzeugs 102, beispielsweise der Fahrsituation.

Der Begriff "Fahrsituation" kann im Rahmen des vorliegenden Dokuments zum Beispiel als eine bestimmte durch eine Anordnung, Aktion oder Interaktion von Verkehrsteilnehmer oder durch bestimmte Fahrparameter von Verkehrsteilnehmern gekennzeichnete Situation verstanden werden, insbesondere auf der Betrachtungsebene von bestimmten Objekten. Insbesondere unterscheidet sich die Bedeutung des Begriffs "Fahrsituation" daher von einer häufig umgangssprachlich verwendeten Bedeutung des Begriffs "Verkehrssituation" welche vielmehr den zusammenfassenden, allgemeinen und/oder statistischen Kategorien wie etwa "freier Verkehr", "dichter Verkehr", "zähfließender Verkehr", "Stau", "Stauende" etc. entspricht. Allerdings können die Fahrsituation bzw. die in dem vorliegenden Dokument beschriebenen Fahrsituationsdaten auch oder nur die jeweilige Verkehrssituation charakterisieren bzw. Verkehrssituationsdaten umfassen oder sein.

Der Begriff Fahrsituation kann ferner als Parameter der Fahrsituation aufgefasst werden. Ein oder mehrere Parameter der Fahrsituation können ein bestimmtes Muster, insbesondere ein Datenmuster, zum Beispiel ein Muster kennzeichnend eine Anordnung und/oder Geschwindigkeit von Objekten und/oder ein Muster der Parameter der Fahrsituation, kennzeichnen, insbesondere repräsentieren. Auch kann die Fahrsituation durch ein räumliches Muster der sogenannten Freiräume in der Umgebung des Fahrzeugs bzw. durch entsprechende Parameter gekennzeichnet sein. Bevorzugt kann die Fahrsituation gekennzeichnet sein durch eines oder mehrere der nachfolgend aufgezählten Merkmale bzw. diesen Merkmalen entsprechende Parameter der Fahrsituation:
- eine bestimmte räumliche Verteilung der Verkehrsteilnehmer und/oder der Bewegungsparameter der Verkehrsteilnehmer, insbesondere ein Anordnungsmuster der Verkehrsteilnehmer in der Umgebung des Fahrzeugs;
- eine bestimmte räumliche Verteilung unbeweglicher Objekte in der Umgebung des Fahrzeugs;
- eine relative Position und/oder Bewegungsparameter bestimmter Arten von Spurmarkierungen, Verkehrszeichen und/oder Lichtzeichenanlagen;
- eine Information über die Vorfahrt des Fahrzeugs, insbesondere gegenüber bestimmten Verkehrsteilnehmern und/oder Verkehrsteilnehmern, die tatsächlich oder zumindest potentiell aus bestimmten Richtungen, zum Beispiel aus einer querenden Straße von rechts oder von links, kommen oder kommen können;
- eine Information zu einer, zum Beispiel einen Grenzwert überschreitenden, Handlung eines Verkehrsteilnehmers in der Umgebung des Fahrzeugs, wie zum Beispiel ein Hupen, ein Lichthupen, ein Drängeln, ein Überholen des Fahrzeugs, ein Überholversuch und dergleichen.

Ferner kann die Fahrsituation durch einen oder mehrere Parameter im Zusammenhang mit relevanten Verkehrsregeln, Verkehrszeichen, Vorfahrten, Ampeln und/oder Ampelphasen gekennzeichnet sein. Die in dem vorliegenden Dokument beschriebene Fahrsituation bzw. beschriebenen Fahrsituationsdaten können eine beliebige Kombination aus den beschriebenen Merkmalen kennzeichnen, charakterisieren bzw. repräsentieren.

Als ein oder mehrere Parameter der Fahrsituation können auch eine zeitliche und/oder räumliche Veränderungscharakteristik, insbesondere ein Gradient, etwa ein zeitlicher und/oder räumlicher Gradient des jeweiligen Parameters, insbesondere Parameterwerts der Fahrsituation bzw. der Verkehrssituation berücksichtigt werden.

Beispielsweise können auch Fahrsituationsparameter basierend auf Umfeldsensordaten und/oder von einer zum Fahrzeug übermittelten Informationen berücksichtigt werden, zum Beispiel Informationen, die von einem weiteren Verkehrsteilnehmer, mittels einer Car-2-Car oder Car-2-X übermittelt wurden. Dabei kann es sich bei den Umfeldsensordaten um auf eine bestimmte Art und Weise verarbeitete Daten eines umfelderfassenden Sensors insbesondere eines Sensorsystems zumindest eines Fahrzeugs handeln. Alternativ oder zusätzlich kann bei dem Verfahren eine Verkehrsregelinformation, kennzeichnend für eine oder mehrere Verkehrsregeln ermittelt und berücksichtigt werden. Die Verkehrsregelinformation kann zum Beispiel die gesetzlichen Regelungen und/oder Logik entsprechen. Die Verkehrsregeln können zum Beispiel für den Aufenthaltsort, insbesondere Land, Provinz, Ort des Fahrzeugs spezifisch sein.

Unter dem Zustand des Fahrzeugs werden zum Beispiel eine oder mehrere odometrische Parameter verstanden, zum Beispiel Bewegungsparameter wie die momentane Geschwindigkeit oder die momentane Längs- und Querbeschleunigung des Fahrzeugs bzw. ein Fahrwerksparameter aufgefasst. Aber auch weitere Informationen können als Zustand des Fahrzeugs aufgefasst werden, beispielsweise ein Füllstand bzw. Ladezustand eines oder mehrerer Energiespeicher des Fahrzeugs oder Fahrwerksparameter. Ferner kann der Betriebszustand, insbesondere Betriebsmodus oder ein aktueller Fahrmodus des Fahrzeugs ermittelt und berücksichtigt werden.

Um eine besonders gut vorhersagbare und/oder besonders sichere Ausführung der nutzerspezifischen Funktionalität zu ermöglichen und/oder die hohen und/oder bestimmte, insbesondere durch den Nutzer wählbaren Anforderungen an Sicherheit und Verfügbarkeit im Automobilbereich zu erfüllen, kann die Programmgenerierungseinheit 112 dazu ausgebildet sein, den Programmcode so zu erzeugen, dass das entsprechende Computerprogramm nur begrenzten Zugriff auf bestimmte Ressourcen hat. Beispielsweise kann der Zugriff des im Verfahren erzeugten dem Programmcode entsprechenden Computerprogramms auf bestimmte Systemressourcen der Steuereinheit 114, beispielsweise CPU und RAM, begrenzt werden. Ferner kann der Zugriff auf bestimmte bereits existierende Fahrzeugfunktionalitäten 106 eingeschränkt werden, insbesondere auf solche, die nicht sicherheitskritisch sind. Weiterhin kann die Programmgenerierungseinheit 112 dazu ausgebildet sein, den Programmcode so zu erzeugen, dass entweder bestimmte durch das Computerprogramm erzeugte Ausgaben oder bewirkte Aktionen unterbunden oder begrenzt werden. Alternativ oder zusätzlich können auch nur vorbestimmte Ausgaben oder Aktionen gestattet werden. Beispielsweise können alle auf Aktoren des Fahrzeugs 102 bezogene, d.h. zum Beispiel einen oder mehrere, insbesondere sicherheitsrelevante, Aktoren mittelbar oder unmittelbar steuernde, Aktionen bzw. eine Ausführung der nutzerspezifischen Funktionalität derart begrenzt werden, dass die Fahrsicherheit des Fahrzeugs 102 beim Ausführen der nutzerspezifischen Funktionalität nicht gefährdet wird.

Die Programmgenerierungseinheit 112 kann ferner dazu ausgebildet sein, zu ermitteln, ob und welche weiteren Programmelemente oder Daten für die Bereitstellung der nutzerspezifischen Funktionalität erforderlich sind und den Programmcode unter Berücksichtigung des Ergebnisses dieser Ermittlung zu erzeugen. Programmelemente können hier beispielsweise Bibliotheken, Schnittstellen, und/oder Treiber sein. Daten können beispielsweise Datenbanken oder Datenverbindungen sein, die zum Bereitstellen der nutzerspezifischen Funktionalität erforderlich sind. Die Ermittlung kann ebenfalls unter Verwendung des generativen vortrainierten Transformers erfolgen.

Die Steuereinheit 114 des Fahrzeugs 102 ist in dem gezeigten Ausführungsbeispiel als eine Recheneinheit des Fahrzeugs 102 ausgebildet. Alternativ kann die Steuereinheit 114 auch zumindest teilweise durch eine von dem Fahrzeug 102 entfernte Recheneinheit gebildet werden. Die Steuereinheit 114 weist in dem gezeigten Ausführungsbeispiel eine zumindest teilweise isolierte Laufzeitumgebung 116 auf, beispielsweise einen Hypervisor, eine virtuelle Maschine oder eine Trusted Computing Base. Innerhalb dieser Laufzeitumgebung 116 können Computerprogramme mit begrenztem Zugriff auf Ressourcen der Steuereinheit 114 ausgeführt werden. Dies erlaubt es auf einfache Weise die Ressourcen der Steuereinheit 114 zu begrenzen, auf die das von der Programmgenerierungseinheit 112 erzeugte Computerprogramm Zugriff hat, um ein sicheres Ausführen der nutzerspezifischen Funktionalität zu ermöglichen.

Figur 2 zeigt einen Ablaufplan eines Verfahrens zum Erzeugen der nutzerspezifischen Funktionalität des Fahrzeugs 102.

Das Verfahren wird in Schritt S200 gestartet. In Schritt S202 empfängt die Eingabeeinheit 110 die Benutzereingabe von dem Nutzer 104. Durch die Benutzereingabe charakterisiert der Nutzer 104 die gewünschte nutzerspezifische Funktionalität, in dem der Nutzer 104 beispielsweise die Wirkungsweise der nutzerspezifischen Funktionalität definiert.

Zum Charakterisieren der nutzerspezifischen Funktionalität kann der Nutzer 104 beispielsweise eine oder mehrere Eingaben der nutzerspezifischen Funktionalität bestimmen und/oder definieren, zum Beispiel in Form von Adjektiven, Hauptwörtern und Verben beschriebene Merkmalen. Der Nutzer 104 kann die Eingabe zum Beispiel durch Bezugnahme oder Verweis auf eine aktuelle erfasste Umgebung und/oder Fahrsituation bestimmen oder definieren. Weitere mögliche Eingaben sind die Position des Fahrzeugs 102, zum Beispiel eine bestimmte Fahrbahnstelle, ein oder mehrere bestimmte oder durch bestimmte Merkmale gekennzeichnete Ereignisse, beispielsweise Fahrsituationen, eine geographische Position und/oder eine Position auf einer Karte. Beispielsweise kann die Position durch eine, gegebenenfalls abstrakte, durch einen bestimmten Zusammenhang, durch eine Logik beschriebene und/oder einen Sammelbegriff umfassende Benutzereingabe beschrieben werden. Beispielsweise als der nächster freie und/oder kostenlose bzw. günstige Parkplatz, der ein bestimmtes Merkmal aufweist, zum Beispiel eine Tankstelle, eine Ladesäule, eine Werkstatt oder eine Eisdiele.

Die Position auf der Karte kann beispielsweise durch eine Auswahl auf einer Karte bestimmt oder definiert werden. Als eine Karte wird hier insbesondere eine digitale Karte, ein Layer der Karte und/oder eine digitalisierte Umgebung, insbesondere eine Abbildung der Umgebung verstanden. Um die nutzerspezifische Funktionalität weiter zu charakterisieren, kann der Nutzer 104 außerdem eine oder mehrere funktionale Verknüpfungen vorgeben, insbesondere logische Verknüpfungen. Beispielsweise kann der Nutzer 104 ein Ereignis, ein erkennbares Muster, einen bestimmten Parameterwert und/oder eine Aufnahme einer Umgebung oder Situation miteinander verknüpfen. Die Verknüpfung kann ferner von einer bestimmten Eingabe abhängig gemacht werden.

Die Funktionsweise der nutzerspezifischen Funktionalität kann der Nutzer 104 in seiner Benutzereingabe dadurch charakterisieren, dass beispielsweise eine bestimmte Aktion ausgeführt oder eine ohnehin ausgeführte Aktion angepasst werden soll. Zum Beispiel kann die Ausführung einer, zum Beispiel unter bestimmten Bedingungen, sonst fälligen Fahrzeugfunktionalität oder Aktion, zum Beispiel im Falle einer durch den Nutzer definierbaren Bedingungen, deaktiviert, pausiert, ausgesetzt und/oder auf eine andere definierbare Art und Weise verändert werden. Es können ferner beispielsweise eine bestimmte Information aus einer Datenbank und/oder dem Internet ermittelt werden, es kann eine Informationsanzeige erzeugt werden und/oder es kann eine Sprachnachricht generiert werden. Zudem kann der Nutzer 104 der nutzerspezifischen Funktionalität den Zugriff auf bestimmte Funktionen ermöglichen, zum Beispiel auf eines Eingabeschnittstellen des Fahrzeugs 102 und/oder einer von dem Fahrzeug 102 entfernten Recheneinheit, bestimmten Fahrzeugfunktionalitäten 106, Ausgabeschnittstellen des Fahrzeugs 102 und/oder der von dem Fahrzeug 102 entfernten Recheneinheit, das Internet, Chatbots, und/oder Digitale Agenten, insbesondere personifizierte Agenten des Nutzers 104.

Ferner kann der Nutzer 104 durch die Benutzereingabe eine nutzerspezifische Funktionalität definieren, welche die Steuerung einer oder mehrerer bestimmter, zum Beispiel wählbarer, Fahrzeugfunktionalitäten 106 veranlasst, zum Beispiel definierbarer Bedingungen, Fälle und/oder auf eine definierbare Art und Weise. Dies können unterschiedliche bereits vorhandene oder bereits erzeugte nutzerspezifische Fahrzeugfunktionalitäten 106 sein. Beispielsweise kann es sich um eine oder mehrere Multimediafunktionalitäten und/oder Infotainment-Funktionalitäten, d.h. die Funktionalität eines Multimediasystems, eines Infotainmentsystems bzw. eine diese ergänzende Funktionalität, einer Navigationsfunktionalität, d.h. einer Funktionalität eines Navigationssystems bzw. eine diese ergänzende Funktionalität, einer Klimafunktionalität, d.h. eine Funktionalität einer Klimaanlage bzw. eine diese ergänzende Funktionalität, eine Funktionalität zum Verstellen bzw. Einstellen eines oder mehrerer Innenraumelemente, insbesondere von Sitzen, und/oder eines Personalisierungssystems handeln.

Zusammengefasst definiert der Nutzer 104 in der Benutzereingabe eine Reihe charakterisierender Merkmale der nutzerspezifischen Funktionalität. Insbesondere Eingangsgrößen, insbesondere eine konkrete Auswahl von Größen und/oder Vorkommnissen, die berücksichtigt werden sollen, Bezüge zu bestimmten geographischen Positionen oder Objekten, die gewünschte Wirkung der Funktionalität, eine Wirkungsweise und/oder Wirkungslogik, Applikationen, die durch die nutzerspezifische Funktionalität beeinflusst werden sollen, und/oder Einschränkungen, zum Beispiel betreffend eine oder mehrere oben genannte Gegebenheiten. Beispielhafte Benutzereingaben sind: "Wenn wir uns unserem Haus nähern und hinter unserem Apfelbaum der Nachbarsjunge herumrennt, dann hupe laut, falls im Fahrzeug 102 nur der Peter fährt oder verringere die Geschwindigkeit falls die Sabine im Fahrzeug 102 fährt oder mitfährt". "Wenn wir das nächste Mal an einem Schuhgeschäft oder Spielzeugladen vorbeifahren, soll ein ablenkender Inhalt für die Sabine bzw. klein Kathy abgespielt werden". "Bei schlechtem Wetter bitte die Warnungen vor Fußgängern etwas früher ausgeben". Andere Eingaben sind möglich, beispielsweise kann der Nutzer in dem letztgenannten Beispiel auch eine andere als die bisher verwendete Ausgabeform charakterisieren. Das Verfahren ermöglicht es dem Nutzer, individuelle, auf seine Bedürfnisse und/oder die für ihn typische Nutzung des Fahrzeugs zugeschnittene und/oder für sein bestimmtes Fahrzeug angepasste Funktionalität zu erzeugen. Somit kann auch einem, insbesondere für Premium-Fahrzeuge bzw. entsprechende Kundesegmente, besonders stark ausgeprägten Bedürfnis für Individualisierung entsprochen werden.

In Schritt S204 wird dann durch die Programmgenerierungseinheit 112 abhängig von der Benutzereingabe zumindest ein Teil des Programmcodes des Computerprogramms erzeugt, dass die nutzerspezifische Funktionalität bereitstellt, wenn es auf der Steuereinheit 114 des Fahrzeugs 102 ausgeführt wird. Das Erzeugen des Programmcodes kann derart erfolgen, dass die nutzerspezifische Funktionalität beispielsweise für einen bestimmten Nutzer 104, insbesondere einen Fahrzeugführer, einen bestimmten Nutzungsstil, insbesondere Fahrstill, und/oder eine bestimmte Fahrsituation optimiert ist. Alternativ oder zusätzlich kann das Erzeugen des Programmcodes derart erfolgen, dass die nutzerspezifische Funktionalität für einen bestimmten Fahrbahnabschnitt oder einem oder mehreren bestimmten Merkmalen, insbesondere Mustern, entsprechenden Fahrbahnabschnitt optimiert ist. Beispielsweise eine Anordnung von Fahrbahnen, Fahrspuren, Verkehrszeichen und/oder geltenden Verkehrsregeln, die bestimmten Merkmalen oder Kriterien entsprechen. Beispielsweise kann es sich um eine Kreuzung, eine Einfahrt, eine Ausfahrt, einen Kreisverkehr, etc. handeln, die unabhängig von ihrer konkreten geographischen Position bestimmten Kriterien, zum Beispiel Mustern entsprechen. Alternativ oder zusätzlich kann der Fahrbahnabschnitt aber auch durch seine geographische Position charakterisiert sein.

Alternativ oder zusätzlich kann der Programmcode in Bezug auf eine Position auf einer digitalen Karte, in einer digitalisierten Umgebung erfolgen, und/oder einer Position, die auf Basis von Sensordaten ermittelt wurde. Dabei kann die nutzerspezifische Funktionalität einer Position, einem Abschnitt einer Karte und/oder einem Muster einer digitalisierten, insbesondere sensorisch erfassten Umgebung zugeordnet werden. Dies kann derart erfolgen, dass die nutzerspezifische Funktionalität auf das, beispielsweise wiederholte, Befahren der Position mit dem Fahrzeug auf die gewünschte Art und Weise reagiert. Bei einem Beispiel wird der Programmcode so erzeugt, dass die nutzerspezifische Funktionalität einen Fahrzeugführer bei Ein- oder Ausfahren aus einer besonderen bzw. bestimmten, d.h. für den Nutzer oder seine Routen spezifischen Ausfahrt, einer Garage und/oder einem Gelände unterstützt.

Nach dem die Programmgenerierungseinheit 112 den Programmcode erzeugt hat, wird dieser in das Computerprogramm umgewandelt, falls erforderlich. Die Umwandlung kann durch Kompilieren erfolgen, insbesondere auch durch eine Just-In-Time Kompilation. Insbesondere wird das Computerprogramm derart erzeugt, dass es in der zumindest teilweise isolierten Laufzeitumgebung 116 ausführbar ist. Das Computerprogramm wird dann in Schritt S206 auf der Steuereinheit 114 des Fahrzeugs 102 bereitgestellt. Durch Ausführen des Computerprogramms auf der Steuereinheit 114 des Fahrzeugs 102 wird dann die nutzerspezifische Funktionalität ausgeführt. Das Verfahren wird dann in Schritt S208 beendet.

Bei dem anhand der Figuren 1 und 2 beschriebenen Ausführungsbeispiel bilden zumindest die Eingabeeinheit 110 und die Steuereinheit 114 die Vorrichtung 100 zum Erzeugen der nutzerspezifischen Funktionalität des Fahrzeugs 102. Weitere in den Figuren 1 und 2 gezeigte und in der vorangegangenen Beschreibung genannte Elemente und Merkmale können Teil der beanspruchten Vorrichtung 100 sein. Ebenso können anhand der Vorrichtung 100 beschriebene Verfahrensschritte Teil des beanspruchten Verfahrens sein.

### Bezugszeichenliste

- 100: Vorrichtung
- 102: Fahrzeug
- 104: Nutzer
- 106: Funktionseinheit
- 108: Sensor
- 110: Eingabeeinheit
- 112: Programmgenerierungseinheit
- 114: Steuereinheit
- 116: Laufzeitumgebung

## Patentansprüche

1. Verfahren zum Erzeugen einer nutzerspezifischen Funktionalität eines Fahrzeugs (102), bei dem
eine Eingabeeinheit (110) eine Benutzereingabe erfasst, welche die nutzerspezifische Funktionalität charakterisiert, und abhängig von der Benutzereingabe Eingabedaten erzeugt;
eine Programmgenerierungseinheit (112) abhängig von den Eingabedaten zumindest ein Teil eines Programmcodes eines Computerprogramms generiert, das die nutzerspezifische Funktionalität bereitstellt, wenn das Computerprogramm auf einer Steuereinheit (114) des Fahrzeugs (102) ausgeführt wird; und
die Programmgenerierungseinheit (112) das Computerprogramm zur Ausführung auf einer Steuereinheit (114) des Fahrzeugs (102) bereitstellt, um die nutzerspezifische Funktionalität bereitzustellen,
**gekennzeichnet durch**:
wobei der Programmcode unter Verwendung eines generativen vortrainierten Transformers erzeugt wird und
wobei unter Berücksichtigung zumindest einer Fahrsituation, eines Zustandes eines Fahrzeuginsassen und/oder eines Zustandes des Fahrzeugs (102) und unter Verwendung des generativen vortrainierten Transformers eine Ausgabe erzeugt wird, die eine Liste mit möglichen Auslösern und existierenden Fahrzeugfunktionalitäten umfasst, anhand derer der Nutzer die nutzerspezifische Funktionalität definieren kann, um den Nutzer (104) beim Erzeugen der Benutzereingabe zu assistieren.

2. Verfahren nach Anspruch 1, wobei abhängig von den Eingabedaten und unter Verwendung des generativen vortrainierten Transformers ermittelt wird, ob und welche Daten, Datenbanken, Bibliotheken, Schnittstellen, und/oder Treiber für die Bereitstellung der nutzerspezifischen Funktionalität erforderlich sind, und der Programmcode unter Berücksichtigung des Ergebnisses der Ermittlung erzeugt wird.

3. Verfahren nach Anspruch 1 oder 2, wobei die Steuereinheit (114) eine zumindest teilweise isolierte Laufzeitumgebung (116), insbesondere einen Hypervisor, eine virtuelle Maschine oder eine Trusted Computing Base, umfasst und der Programmcode innerhalb der zumindest teilweise isolierten Laufzeitumgebung (116) ausgeführt wird, um die nutzerspezifische Funktionalität bereitzustellen.

4. Verfahren nach Anspruch 3, wobei der Programmcode derart erzeugt wird, dass der Zugriff des Computerprogramms auf Ressourcen der Steuereinheit (114) begrenzt ist, wenn das Computerprogramm auf der Steuereinheit (114) ausgeführt wird, insbesondere derart, dass das Computerprogramm nur auf vordefinierte Ressourcen der Steuereinheit (114) Zugriff hat.

5. Verfahren nach Anspruch 3 oder 4, wobei der Programmcode derart erzeugt wird, dass der Zugriff des Computerprogramms auf vordefinierte Fahrzeugfunktionalitäten (106) begrenzt ist, wenn das Computerprogramm auf der Steuereinheit (114) ausgeführt wird.

6. Verfahren nach einem der vorhergehenden Ansprüche, wobei der Programmcode derart erzeugt wird, dass Ergebnisse der Ausführung der nutzerspezifischen Funktionalität, die bestimmten ersten Merkmalen, insbesondere ersten Wertebereichen und/oder ersten Mustern, entsprechen, unterbunden werden und/oder dass ausschließlich Ergebnisse der Ausführung der nutzerspezifischen Funktionalität, die bestimmten zweiten Merkmalen, insbesondere zweiten Wertebereichen und/oder zweiten Mustern, entsprechen, ermöglicht werden, wenn das Computerprogramm auf der Steuereinheit (114) ausgeführt wird.

7. Vorrichtung (100) zum Erzeugen einer nutzerspezifischen Funktionalität eines Fahrzeugs (102), umfassend
eine Eingabeeinheit (110), die dazu ausgebildet ist, eine Benutzereingabe zu erfassen, welche die nutzerspezifische Funktionalität charakterisiert, und abhängig von der Benutzereingabe Eingabedaten zu erzeugen; und
eine Programmgenerierungseinheit (112), die dazu ausgebildet ist, abhängig von den Eingabedaten zumindest einen Teil eines Programcodes eines Computerprogramms zu generieren, das die nutzerspezifische Funktionalität bereitstellt, wenn das Computerprogramm auf einer Steuereinheit (114) des Fahrzeugs (102) ausgeführt wird,
**gekennzeichnet durch**:
wobei die Programmgenerierungseinheit (112) ferner dazu ausgebildet ist, den Programmcode unter Verwendung eines generativen vortrainierten Transformers zu erzeugen und
unter Berücksichtigung zumindest einer Fahrsituation, eines Zustandes eines Fahrzeuginsassen und/oder eines Zustandes des Fahrzeugs (102) und unter Verwendung des generativen vortrainierten Transformers eine Ausgabe zu erzeugen, die eine Liste mit möglichen Auslösern und existierenden Fahrzeugfunktionalitäten umfasst, anhand derer der Nutzer die nutzerspezifische Funktionalität definieren kann, um den Nutzer (104) beim Erzeugen der Benutzereingabe zu assistieren.

8. Vorrichtung (100) nach Anspruch 8, wobei die Eingabeeinheit (110) dazu ausgebildet ist, die Benutzereingabe in Textform, in Form einer Spracheingabe und/oder in Form einer Benutzerinteraktion mit einer graphischen Benutzeroberfläche zu empfangen.

9. Computerprogrammprodukt zum Erzeugen einer nutzerspezifischen Funktionalität, umfassend ein Computerprogramm, das dazu ausgebildet ist, das Verfahren gemäß einem der Ansprüche 1 bis 6 auszuführen, wenn das Computerprogramm auf einer oder mehreren Steuereinheiten ausgeführt wird.

10. Computerprogrammprodukt gemäß Anspruch 9, wobei das Computerprogramm zumindest einen Teil eines generativen vortrainierten Transformers, insbesondere einen Teil des jeweiligen vortrainierten Modells, und/oder Logik und/oder Daten zum Trainieren, insbesondere Nachtrainieren, und/oder zum Betreiben des generativen vortrainierten Transformers umfasst.

## Claims

1. Method for producing a user-specific functionality of a vehicle (102), wherein
an input unit (110) detects a user input which characterizes the user-specific functionality, and produces input data depending on the user input;
depending on the input data, a program generating unit (112) generates at least one part of a program code of a computer program which provides the user-specific functionality when the computer program is executed on a control unit (114) of the vehicle (102); and
the program generating unit (112) provides the computer program for execution on a control unit (114) of the vehicle (102) in order to provide the user-specific functionality,
**characterized by**:
wherein the program code is produced using a generative pretrained transformer and
wherein taking account of at least one driving situation, a state of a vehicle occupant and/or a state of the vehicle (102) and using the generative pretrained transformer, an output is produced which comprises a list with possible triggers and existing vehicle functionalities which the user can take as a basis for defining the user-specific functionality in order to assist the user (104) in producing the user input.

2. Method according to Claim 1, wherein depending on the input data and using the generative pretrained transformer, there is a determination of whether and which data, databases, libraries, interfaces, and/or drivers are required for providing the user-specific functionality, and the program code is produced taking account of the result of the determination.

3. Method according to Claim 1 or 2, wherein the control unit (114) comprises an at least partly isolated runtime environment (116), in particular a hypervisor, a virtual machine or a trusted computing base, and the program code is executed within the at least partly isolated runtime environment (116) in order to provide the user-specific functionality.

4. Method according to Claim 3, wherein the program code is produced in such a way that the computer program's access to resources of the control unit (114) is limited when the computer program is executed on the control unit (114), in particular in such a way that the computer program has access only to predefined resources of the control unit (114).

5. Method according to Claim 3 or 4, wherein the program code is produced in such a way that the computer program's access to predefined vehicle functionalities (106) is limited when the computer program is executed on the control unit (114).

6. Method according to any of the preceding claims, wherein the program code is produced in such a way that results of the execution of the user-specific functionality which correspond to specific first features, in particular first value ranges and/or first patterns, are prohibited and/or that exclusively results of the execution of the user-specific functionality which correspond to specific second features, in particular second value ranges and/or second patterns, are enabled when the computer program is executed on the control unit (114).

7. Device (100) for producing a user-specific functionality of a vehicle (102), comprising an input unit (110) configured to detect a user input which characterizes the user-specific functionality, and to produce input data depending on the user input; and a program generating unit (112) configured, depending on the input data, to generate at least one part of a program code of a computer program which provides the user-specific functionality when the computer program is executed on a control unit (114) of the vehicle (102),
**characterized by**:
wherein the program generating unit (112) is furthermore configured to produce the program code using a generative pretrained transformer and
taking account of at least one driving situation, a state of a vehicle occupant and/or a state of the vehicle (102) and using the generative pretrained transformer, to produce an output which comprises a list with possible triggers and existing vehicle functionalities which the user can take as a basis for defining the user-specific functionality in order to assist the user (104) in producing the user input.

8. Device (100) according to Claim 8, wherein the input unit (110) is configured to receive the user input in text form, in the form of a voice input and/or in the form of a user interaction with a graphical user interface.

9. Computer program product for producing a user-specific functionality, comprising a computer program configured to execute the method according to any of Claims 1 to 6 when the computer program is executed on one or more control units.

10. Computer program product according to Claim 9, wherein the computer program comprises at least one part of a generative pretrained transformer, in particular a part of the respective pretrained model, and/or logic and/or data for training, in particular retraining, and/or for operating the generative pretrained transformer.

## Revendications

1. Procédé pour générer une fonctionnalité spécifique à l'utilisateur d'un véhicule (102), dans lequel
une unité d'entrée (110) détecte une entrée utilisateur qui caractérise la fonctionnalité spécifique à l'utilisateur et génère des données d'entrée en fonction de l'entrée utilisateur ;
une unité de génération de programme (112) génère, en fonction des données d'entrée, au moins une partie d'un code de programme d'un programme d'ordinateur qui fournit la fonctionnalité spécifique à l'utilisateur lorsque le programme d'ordinateur est exécuté sur une unité de commande (114) du véhicule (102) ; et
l'unité de génération de programme (112) fournit le programme d'ordinateur pour qu'il soit exécuté sur une unité de commande (114) du véhicule (102) afin de fournir la fonctionnalité spécifique à l'utilisateur,
**caractérisé en ce que** :
le code de programme est généré en utilisant un transformateur génératif préentraîné et
**en ce que**, en tenant compte d'au moins une situation de conduite, d'un état d'un occupant du véhicule et/ou d'un état du véhicule (102) et en utilisant le transformateur génératif préentraîné, on génère une sortie qui comprend une liste de déclencheurs possibles et de fonctionnalités existantes du véhicule, à partir de laquelle l'utilisateur peut définir la fonctionnalité spécifique à l'utilisateur afin d'aider l'utilisateur (104) à générer l'entrée utilisateur.

2. Procédé selon la revendication 1, dans lequel, en fonction des données d'entrée et en utilisant le transformateur génératif préentraîné, on détermine si et quelles données, bases de données, bibliothèques, interfaces et/ou pilotes sont nécessaires pour la fourniture de la fonctionnalité spécifique à l'utilisateur, et le code de programme est généré en tenant compte du résultat de la détermination.

3. Procédé selon la revendication 1 ou 2, dans lequel l'unité de commande (114) comprend un environnement d'exécution au moins partiellement isolé (116), en particulier un hyperviseur, une machine virtuelle ou une base de calcul de confiance, et le code de programme est exécuté dans l'environnement d'exécution au moins partiellement isolé (116) afin de fournir la fonctionnalité spécifique à l'utilisateur.

4. Procédé selon la revendication 3, dans lequel le code de programme est généré de telle sorte que l'accès du programme d'ordinateur aux ressources de l'unité de commande (114) soit limité lorsque le programme d'ordinateur est exécuté sur l'unité de commande (114), en particulier de telle sorte que le programme d'ordinateur n'ait accès qu'à des ressources prédéfinies de l'unité de commande (114).

5. Procédé selon la revendication 3 ou 4, dans lequel le code de programme est généré de telle sorte que l'accès du programme d'ordinateur à des fonctionnalités prédéfinies du véhicule (106) soit limité lorsque le programme d'ordinateur est exécuté sur l'unité de commande (114).

6. Procédé selon l'une quelconque des revendications précédentes, dans lequel le code de programme est généré de telle sorte que des résultats de l'exécution de la fonctionnalité spécifique à l'utilisateur correspondant à certaines premières caractéristiques, en particulier à des premières plages de valeurs et/ou à des premiers motifs, soient empêchés et/ou que seuls des résultats de l'exécution de la fonctionnalité spécifique à l'utilisateur correspondant à certaines deuxièmes caractéristiques, en particulier à des deuxièmes plages de valeurs et/ou à des deuxièmes motifs, soient rendus possibles, lorsque le programme d'ordinateur est exécuté sur l'unité de commande (114).

7. Dispositif (100) pour générer une fonctionnalité spécifique à l'utilisateur d'un véhicule (102), comprenant
une unité d'entrée (110) qui est conçue pour détecter une entrée utilisateur qui caractérise la fonctionnalité spécifique à l'utilisateur, et pour générer des données d'entrée en fonction de l'entrée utilisateur ; et une unité de génération de programme (112) qui est conçue pour générer, en fonction des données d'entrée, au moins une partie d'un code de programme d'un programme d'ordinateur qui fournit la fonctionnalité spécifique à l'utilisateur, lorsque le programme d'ordinateur est exécuté sur une unité de commande (114) du véhicule (102),
**caractérisé en ce que** :
l'unité de génération de programme (112) est en outre conçue pour générer le code de programme en utilisant un transformateur génératif préentraîné, et
générer, en tenant compte d'au moins une situation de conduite, d'un état d'un occupant du véhicule et/ou d'un état du véhicule (102) et en utilisant le transformateur génératif préentraîné, une sortie qui comprend une liste de déclencheurs possibles et de fonctionnalités existantes du véhicule, à partir de laquelle l'utilisateur peut définir la fonctionnalité spécifique à l'utilisateur afin d'aider l'utilisateur (104) à générer l'entrée utilisateur.

8. Dispositif (100) selon la revendication 8, dans lequel l'unité d'entrée (110) est conçue pour recevoir l'entrée utilisateur sous forme de texte, sous la forme d'une entrée vocale et/ou sous la forme d'une interaction de l'utilisateur avec une interface graphique utilisateur.

9. Produit de programme d'ordinateur pour générer une fonctionnalité spécifique à l'utilisateur, comprenant un programme d'ordinateur qui est conçu pour mettre en œuvre le procédé selon l'une quelconque des revendications 1 à 6 lorsque le programme d'ordinateur est exécuté sur une ou plusieurs unités de commande.

10. Produit de programme d'ordinateur selon la revendication 9, dans lequel le programme d'ordinateur comprend au moins une partie d'un transformateur génératif préentraîné, en particulier une partie du modèle préentraîné respectif, et/ou une logique et/ou des données destinées à l'entraînement, en particulier au post-entraînement, et/ou au fonctionnement du transformateur génératif préentraîné.
